# EUROPEAN PATENT APPLICATION

(11) **EP 4 311 307 A1**
(43) Date of publication of application: **24.01.2024**
(21) Application number: 22790919.9
(22) Date of filing: 13.04.2022
(51) Int. Cl.: H04W 36/00, H04W 36/30

(54) **DATA TRANSMISSION METHOD AND DATA TRANSMISSION APPARATUS**

(30) Priority: 19.04.2021 CN 202110419827
(71) Applicant: Huawei Technologies Co., Ltd., Longgang Shenzhen, Guangdong 518129 (CN)
(72) Inventor: HUANG, Cheng, Shenzhen, Guangdong 518129 (CN); WANG, Yiming, Shenzhen, Guangdong 518129 (CN); ZHANG, Yu, Shenzhen, Guangdong 518129 (CN)
(74) Representative: Grünecker Patent- und Rechtsanwälte PartG mbB
(86) International application number: PCT/CN2022/086521
(87) International publication number: WO 2022/222811

(57) **Abstract**

This application provides a data transmission method and a data transmission apparatus, to help reduce a switching delay of a terminal device among different Wi-Fi links, and improve service experience of a user. The method includes: A control device obtains network status information of a plurality of APs, where the plurality of APs include a first AP and a second AP, the network status information includes network status information of the first AP and the second AP, and a first wireless fidelity Wi-Fi link is already established between the first AP and a terminal device. The control device sends first indication information to the terminal device based on the network status information through the first Wi-Fi link, where the first indication information indicates the terminal device to establish a second Wi-Fi link to the second AP.

## Description

This application claims priority to Chinese Patent Application No. 202110419827.6, filed with the China National Intellectual Property Administration on April 19, 2021 and entitled "DATA TRANSMISSION METHOD AND DATA TRANSMISSION APPARATUS", which is incorporated herein by reference in its entirety.

### TECHNICAL FIELD

This application relates to the field of communication technologies, and more specifically, to a data transmission method and a data transmission apparatus.

### BACKGROUND

With popularization of a home intelligent optical modem, an access point (access point, AP), and fiber to the room (fiber to the room, FTTR) networking, when a terminal device (for example, a mobile phone or a tablet computer) moves in a plurality of rooms of a home, switching among different wireless fidelity (wireless fidelity, Wi-Fi) networks may occur. Consequently, user experience on delay-sensitive services such as games, virtual reality (virtual reality, VR), and the like is affected.

Currently, a gateway device and an AP associated to the gateway device may establish one Wi-Fi link to the terminal device. When quality of the Wi-Fi link is poor or the Wi-Fi link is interrupted, the gateway device and the AP associated to the gateway device may re-establish another Wi-Fi link to the terminal device based on an association request of the terminal device.

However, in the foregoing method, the terminal device does not switch the Wi-Fi link in time. This easily causes problems such as a switching delay, network dissociation, and the like. Consequently, service experience of a user is affected.

### SUMMARY

This application provides a data transmission method and a data transmission apparatus. A control device may support establishment of a plurality of Wi-Fi links, to implement cooperative work among the plurality of Wi-Fi links. This helps reduce a delay caused by switching among different Wi-Fi links.

According to a first aspect, a data transmission method is provided, including: A control device obtains network status information of a plurality of APs, where the plurality of APs include a first AP and a second AP, the network status information includes network status information of the first AP and the second AP, and a first wireless fidelity Wi-Fi link is already established between the first AP and a terminal device. The control device sends first indication information to the terminal device based on the network status information through the first Wi-Fi link, where the first indication information indicates the terminal device to establish a second Wi-Fi link to the second AP.

The control device may control the terminal device to maintain associations of two Wi-Fi links at the same time. When quality of one of the Wi-Fi links is poor or one of the Wi-Fi links is interrupted, the terminal device may quickly switch data to the other associated Wi-Fi link for transmission. In this way, cooperative work among a plurality of Wi-Fi links can be implemented. Because the second Wi-Fi link is already established, a delay caused by switching among different Wi-Fi links is reduced, and reliability of data transmission is improved. Therefore, service experience of a user is improved.

With reference to the first aspect, in some implementations of the first aspect, the network status information includes at least one of a service set identifier SSID, a quantity of accessed terminal devices, or signal strength information.

In this embodiment of this application, the control device may collect the network status information of the plurality of APs, and select an appropriate AP for the terminal device for association based on the network status information. This helps ensure stability and the reliability of the data transmission.

With reference to the first aspect, in some implementations of the first aspect, that the control device sends first indication information to the terminal device based on the network status information through the first Wi-Fi link includes: The control device determines a plurality of candidate devices based on signal strength information that is of the terminal device and that is obtained by the plurality of APs, where the plurality of candidate devices include the second AP. The control device determines, based on a quantity of terminal devices accessing the plurality of candidate devices, that the second AP establishes the second Wi-Fi link to the terminal device. The control device sends the first indication information to the terminal device through the first Wi-Fi link, to indicate the terminal device to establish the second Wi-Fi link to the second AP.

In this embodiment of this application, the signal strength information may be the signal strength information that is of the terminal device and that is collected by the plurality of APs, and different APs may collect different signal strength information of the terminal device. The control device may first exclude the plurality of APs based on the signal strength information in the network status information, to select an AP that can receive a strong signal as a candidate device, and then determine, based on the quantity of terminal devices accessing the candidate device, an AP that establishes the second Wi-Fi link to the terminal device. In this way, an AP having good communication quality is selected, and communication stability is improved.

With reference to the first aspect, in some implementations of the first aspect, that the control device determines a plurality of candidate devices based on signal strength information that is of the terminal device and that is obtained by the plurality of APs includes: The control device compares first signal strength information in the signal strength information that is of the terminal device and that is obtained by the plurality of APs with a first threshold. If the first signal strength information is greater than or equal to the first threshold, the control device determines an AP corresponding to the first signal strength information as a candidate device.

In this embodiment of this application, the first signal strength information is used as an example. When the first signal strength information is greater than or equal to the first threshold, a communication signal requirement can be met. Therefore, the AP corresponding to the first signal strength information may be determined as the candidate device.

With reference to the first aspect, in some implementations of the first aspect, that the control device determines, based on a quantity of terminal devices accessing the plurality of candidate devices, that the second AP establishes the second Wi-Fi link to the terminal device includes: The control device determines a candidate device having a smallest quantity of accessed terminal devices in the plurality of candidate devices as the second AP. The control device determines that the second AP establishes the second Wi-Fi link to the terminal device.

In this embodiment of this application, because the quantity of the terminal devices accessing the plurality of candidate devices may be different, if there is a large quantity of terminal devices accessing a candidate device, communication quality may be affected. Therefore, the control device may determine that the candidate device having the smallest quantity of terminal devices accessing the plurality of candidate devices establishes the second Wi-Fi link to the terminal device. This helps provide good Wi-Fi link quality for the terminal device.

With reference to the first aspect, in some implementations of the first aspect, the control device sends second indication information to the terminal device through the first Wi-Fi link, where the second indication information indicates the terminal device to dissociate the first Wi-Fi link.

In this embodiment of this application, the control device may indicate, based on information that is in the network status information and that is related to the first AP, the terminal device to dissociate the first Wi-Fi link and maintain the second Wi-Fi link, so that flexible switching among different Wi-Fi links can be implemented.

According to a second aspect, a data transmission method is provided, including: A first AP receives first indication information from a control device, where the first indication information indicates a terminal device to establish a second Wi-Fi link to a second AP, and a first Wi-Fi link is already established between the terminal device and the first AP. The first AP sends the first indication information to the terminal device through the first Wi-Fi link.

In this embodiment of this application, because the first Wi-Fi link is already established between the first AP and the terminal device, the first AP can receive information from the control device through the first Wi-Fi link, and send instructions of the control device to the terminal device through the first Wi-Fi link. This helps establish the second Wi-Fi link.

With reference to the second aspect, in some implementations of the second aspect, the first AP receives second indication information from the control device, where the second indication information indicates the terminal device to dissociate the first Wi-Fi link. The first AP sends the second indication information to the terminal device through the first Wi-Fi link.

According to a third aspect, a data transmission apparatus is provided. The data transmission apparatus is configured to perform the method according to any one of the possible implementations of the first aspect. Specifically, the apparatus includes a module configured to perform the method according to any one of the possible implementations of the first aspect.

According to a fourth aspect, another data transmission apparatus is provided, including: The data transmission apparatus is configured to perform the method according to any one of the possible implementations of the second aspect. Specifically, the apparatus includes a module configured to perform the method according to any one of the possible implementations of the second aspect.

According to a fifth aspect, still another data transmission apparatus is provided, including a processor. The processor is coupled to a memory, and may be configured to execute instructions in the memory, to implement the method according to any one of the possible implementations of the foregoing aspects. Optionally, the apparatus further includes the memory. Optionally, the apparatus further includes a communication interface, and the processor is coupled to the communication interface.

In an implementation, the data transmission apparatus is a control device or a first AP. When the data transmission apparatus is the control device, the communication interface may be a transceiver or an input/output interface.

In another implementation, the data transmission apparatus is a chip configured in a control device or a first AP. When the data transmission apparatus is the chip configured in the control device, the communication interface may be an input/output interface.

According to a sixth aspect, a processor is provided, including: an input circuit, an output circuit, and a processing circuit. The processing circuit is configured to receive a signal through the input circuit, and transmit a signal through the output circuit, so that the processor performs the method according to any one of the possible implementations of the foregoing aspects.

In a specific implementation process, the processor may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a seventh aspect, a processing apparatus is provided. The processing apparatus includes a processor and a memory. The processor is configured to read instructions stored in the memory, receive a signal through a receiver, and transmit a signal through a transmitter, to perform the method according to any one of the possible implementations of the first aspect.

Optionally, there are one or more processors, and there are one or more memories.

Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

It should be understood that a related data exchange process, for example, sending of indication information, may be a process of outputting the indication information from the processor, and receiving of capability information may be a process of receiving the input capability information by the processor. Specifically, data outputted by processor may be output to the transmitter, and input data received by the processor may be from the receiver. The transmitter and the receiver may be collectively referred to as a transceiver.

The processing apparatus in the seventh aspect may be a chip, and the processor may be implemented by using hardware or software. When being implemented by using the hardware, the processor may be a logic circuit, an integrated circuit, or the like. When being implemented by using the software, the processor may be a general-purpose processor, and is implemented by reading software code stored in the memory. The memory may be integrated into the processor, or may be located outside the processor and exist independently.

According to an eighth aspect, a computer program product is provided. The computer program product includes a computer program (which may also be referred to as code or instructions). When the computer program is run, a computer is enabled to perform the method according to any one of the possible implementations of the foregoing aspects.

According to a ninth aspect, a computer-readable storage medium is provided. The computer-readable storage medium stores a computer program (which may also be referred to as code or instructions). When the computer program is run on a computer, the computer is enabled to perform the method according to any one of the possible implementations of the foregoing aspects.

### BRIEF DESCRIPTION OF DRAWINGS

FIG. 1 is a schematic diagram of a network architecture for implementing data transmission according to an embodiment of this application;
FIG. 2 is a schematic flowchart of a data transmission method according to an embodiment of this application;
FIG. 3 is a schematic diagram of another network architecture for implementing data transmission according to an embodiment of this application;
FIG. 4 is a schematic flowchart of another data transmission method according to an embodiment of this application;
FIG. 5 is a schematic block diagram of a data transmission apparatus according to an embodiment of this application;
FIG. 6 is a schematic block diagram of another data transmission apparatus according to an embodiment of this application; and
FIG. 7 is a schematic block diagram of still another data transmission apparatus according to an embodiment of this application.

### DESCRIPTION OF EMBODIMENTS

The following describes technical solutions of this application with reference to accompanying drawings.

For ease of understanding, terms in embodiments of this application are first briefly described below.
1. AP: The AP is an entity that provides a distributed service access function via wireless media.
2. FTTR: The FTTR means to route an optical fiber to each room node in a home, and is a basic technical mode for optical fiber access.
3. Optical network terminal (optical network terminal, ONT): The optical network terminal provides a direct or remote user-side interface for an optical access network, to associate to a central office device.
4. Various application services (over the top, OTT) provided for users over an internet: Typical OTT services include internet television services and application stores.

With popularization of FTTR networking technologies, a gateway device and a plurality of APs are jointly used in a current home network, and there may be different Wi-Fi networks in a plurality of rooms of a home. When a user holds a terminal and moves in the plurality of rooms of the home, switching among different Wi-Fi networks may occur. In a switching process of the Wi-Fi networks, the following problems usually occurs:
1. If a terminal device does not switch among a 2.4 GHz Wi-Fi network and a 5 GHz Wi-Fi network of a same AP in time, user experience is affected.
2. When the terminal device switches among Wi-Fi networks of different APs, a service may be interrupted temporarily due to a long switching delay. Consequently, user experience is affected.

In view of this, embodiments of this application provide a data transmission method and a data transmission apparatus. A control device may obtain network status information of a plurality of APs, and indicate, based on the network status information, a terminal device to establish two Wi-Fi links with the APs, so that to-be-transmitted data can be transmitted on at least one of the two Wi-Fi links. This helps reduce a switching delay among different Wi-Fi links, and improve user experience.

Before the data transmission method and the data transmission apparatus provided in embodiments of this application are described, the following descriptions are first provided.

First, in embodiments shown below, terms and English abbreviations, such as a control device, network status information, and a Wi-Fi link, are examples provided for ease of description, and should not constitute any limitation on this application. This application does not exclude a possibility of defining another term that can implement a same or similar function in an existing or future protocol.

Second, the terms "first", "second", and various numbers in the following embodiments are merely used for differentiation for ease of description, and are not intended to limit the scope of embodiments of this application. For example, the terms "first", "second", and various numbers are used to distinguish among different Wi-Fi links.

Third, "at least one" means one or more, and "a plurality of" means two or more. The term "and/or" is an association relationship for describing associated objects and represents that three relationships may exist. For example, A and/or B may represent the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may represent: a, b, c, a and b, a and c, b and c, or a, b, and c, where a, b, and c may be singular or plural.

The terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device associated to a wireless modem, a vehicle-mounted device, a wearable device, a terminal device in a future 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly by a user or integrated into clothes or an accessory of a user. The wearable device is not only a hardware device, but also implements powerful functions through software support, data interaction, and cloud interaction. In a broad sense, a wearable intelligent device includes full-featured and large-sized devices that can implement complete or partial functions without depending on smartphones, for example: smart watches or smart glasses, and devices that focus only one type of application function and need to work with other devices such as smartphones, such as various smart bands or smart jewelry for monitoring physical signs

In addition, in embodiments of this application, the terminal device may alternatively be a terminal device in an IoT (information of things) system. IoT is an important part of future development of information technologies. A main technical feature of the IoT is associating things to a network by using a communication technology, to implement an intelligent network for human-machine interconnection and thing-thing interconnection. In embodiments of this application, an IoT technology may implement massive associations, deep coverage, and terminal power saving by using, for example, a narrowband (narrow band, NB) technology.

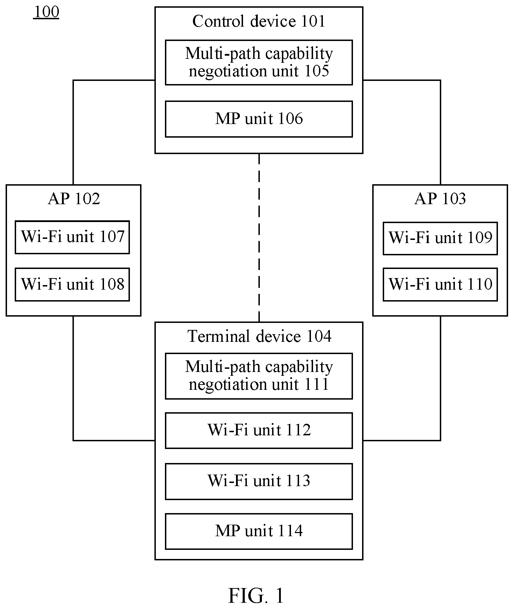

FIG. 1 is a schematic diagram of a network architecture 100 for implementing data transmission according to an embodiment of this application. The network architecture 100 includes a control device 101, an AP 102, an AP 103, and a terminal device 104. The control device 101 may be associated to the AP 102 and the AP 103 in a wired or wireless manner. This is not limited in embodiments of this application. The control device 101 may control the AP 102 and the AP 103 to establish at least one Wi-Fi link to the terminal device 104. For example, the AP 102 and the AP 103 may be referred to as APs associated to the control device. The following separately describes the control device 101, the AP 102, the AP 103, and the terminal device 104.

### 1. Control device 101

The control device 101 may include a multi-path capability negotiation unit 105 and a multi-path (multi-path, MP) data unit 106.

The multi-path capability negotiation unit 105 may control establishment of a plurality of Wi-Fi links, send multi-path heartbeat, and detect the multi-path heartbeat.

The multi-path heartbeat may be understood as a quality indicator of the plurality of Wi-Fi links. For example, the quality indicator may be a bandwidth indicator or a delay indicator.

The MP data unit 106 may determine a multi-path data transmission policy of service data stream, and control, based on the multi-path data transmission policy, to-be-transmitted data to be transmitted on the at least one Wi-Fi link established by the AP 102 and/or the AP 103. The MP data unit 106 in the control device may also be referred to as an MP server.

For example, the MP data unit 106 may split or copy a user datagram protocol (user datagram protocol, UDP) data stream to obtain a plurality of UDP sub-data streams, and transmit the plurality of UDP sub-data streams on a plurality of paths.

It should be understood that the multi-path data transmission policy is used to control the to-be-transmitted data to be transmitted on the plurality of Wi-Fi links, and may include at least one of a multi-fed and selective receiving policy, a multi-path aggregation policy, or an active/standby policy.

### 2. AP 102

The AP 102 may include a Wi-Fi unit 107 and a Wi-Fi unit 108. The Wi-Fi unit 107 may establish one Wi-Fi link to the terminal device 104, and the Wi-Fi unit 108 may establish another Wi-Fi link to the terminal device 104.

### 3. AP 103

The AP 103 includes a Wi-Fi unit 109 and a Wi-Fi unit 110. For example, the Wi-Fi unit 109 may establish one Wi-Fi link to the terminal device 104, and the Wi-Fi unit 110 may establish another Wi-Fi link to the terminal device 104.

### 4. Terminal device 104

The terminal device 104 may include a multi-path capability negotiation unit 111, a Wi-Fi unit 112, a Wi-Fi unit 113, and an MP data unit 114.

The multi-path capability negotiation unit 111 may control the establishment of the plurality of Wi-Fi links and detect the multi-path heartbeat.

The Wi-Fi unit 112 may establish a Wi-Fi link to a Wi-Fi unit of the AP 102 or to a Wi-Fi unit of the AP 103.

The Wi-Fi unit 113 may also establish a Wi-Fi link to the Wi-Fi unit of the AP 102 or to the Wi-Fi unit of the AP 103.

Functions of the MP data unit 114 are similar to those of the MP data unit 106. The MP data unit 114 may determine the multi-path data transmission policy of the service data stream, and control, based on the multi-path data transmission policy, the to-be-transmitted data to be transmitted on the at least one Wi-Fi link established by the terminal device 104. The MP data unit 114 in the terminal device may also be referred to as an MP client.

It should be understood that a Wi-Fi link may be established between Wi-Fi units that work on a same frequency band.

For example, if the Wi-Fi unit 112 of the terminal device 104 works in a 2.4 GHz frequency band, the Wi-Fi unit 113 of the terminal device 104 works in a 5 GHz frequency band, the Wi-Fi unit 107 of the AP 102 works in the 2.4 GHz frequency band, and the Wi-Fi unit 108 of the AP 102 works in the 5 GHz frequency band, one Wi-Fi link may be established between the Wi-Fi unit 112 and the Wi-Fi unit 107 that work in the same 2.4 GHz frequency band, and another Wi-Fi link may be established between the Wi-Fi unit 113 and the Wi-Fi unit 108 that work in the same 5 GHz frequency band.

For example, if the Wi-Fi unit 112 of the terminal device 104 works in the 2.4 GHz frequency band, the Wi-Fi unit 113 of the terminal device 104 works in the 5 GHz frequency band, the Wi-Fi unit 107 of the AP 102 works in the 2.4 GHz frequency band, and the Wi-Fi unit 110 of the AP 103 works in the 5 GHz frequency band, one Wi-Fi link may be established between the Wi-Fi unit 112 and the Wi-Fi unit 107 that work in the same 2.4 GHz frequency band, and another Wi-Fi link may be established between the Wi-Fi unit 113 and the Wi-Fi unit 110 that work in the same 5 GHz frequency band.

The foregoing description is provided by using an example in which the Wi-Fi unit 112 of the terminal device 104 works in the 2.4 GHz frequency band, and the Wi-Fi unit 113 of the terminal device 104 works in the 5 GHz frequency band. It should be understood that the Wi-Fi unit 112 of the terminal device 104 may alternatively work in the 5 GHz frequency band, and the Wi-Fi unit 113 of the terminal device 104 works in the 2.4 GHz frequency band. This is not limited in embodiments of this application. Similarly, working frequency bands of the Wi-Fi units corresponding to the AP 102 and the AP 103 are not limited in embodiments of this application.

For ease of description, it is assumed that working frequency bands of respective Wi-Fi units of the terminal device 104, the AP 102, and the AP 103 in embodiments of this application are as follows:
1. The Wi-Fi unit 112 of the terminal device 104 works in the 2.4 GHz frequency band, and the Wi-Fi unit 113 of the terminal device 104 works in the 5 GHz frequency band.
2. The Wi-Fi unit 107 of the AP 102 works in the 2.4 GHz frequency band, and the Wi-Fi unit 108 of the AP 102 works in the 5 GHz frequency band.
3. The Wi-Fi unit 109 of the AP 103 works in the 2.4 GHz frequency band, and the Wi-Fi unit 110 of the AP 102 works in the 5 GHz frequency band.

Both the 2.4 GHz Wi-Fi link and the 5 GHz Wi-Fi link in embodiments of this application are examples for description, and the Wi-Fi unit may alternatively work in a Wi-Fi link of another frequency band. This is not limited in embodiments of this application.

In an example, only the AP 102 and the AP 103 are described in the network architecture 100. It should be understood that the network architecture 100 may further include other APs, such as a third AP, a fourth AP, ..., and the like, and the other APs have similar functions to the AP 102 and the AP 103. This is not limited in embodiments of this application.

By way of example, and not limitation, in embodiments of this application, the control device 101 is disposed independently of the AP 102 and the AP 103. It should be understood that the control device 101 may alternatively be disposed inside any one of the AP 102, the AP 103, or the other APs described above, so that any one of the AP 102, the AP 103, or the other APs performs a same step and/or procedure as that of the control device 101.

For example, in embodiments of this application, an AP on which the control device 101 is disposed may be referred to as a control AP. It should be understood that the control AP supports an original function of establishing a Wi-Fi link of the control AP, and supports functions of the multi-path capability negotiation unit 105 and the MP server 106 of the control device.

For example, the control AP may be a home gateway device. The terminal device may access an internet service via the home gateway device. In addition, cooperative work among the plurality of Wi-Fi links may be implemented between the terminal device and the home gateway device by using a multi-path data transmission technology.

For ease of description, the following describes the data transmission method provided in embodiments of this application by using an example in which the control device is set independently of an AP connected to the control device. When the control device is disposed inside an AP (namely, the control AP), the data transmission method provided in embodiments of this application can still be used, provided that the control AP is considered as an AP having a same function as the control device. The control AP may perform steps and/or procedures performed by the control device and steps and/or procedures performed by any AP.

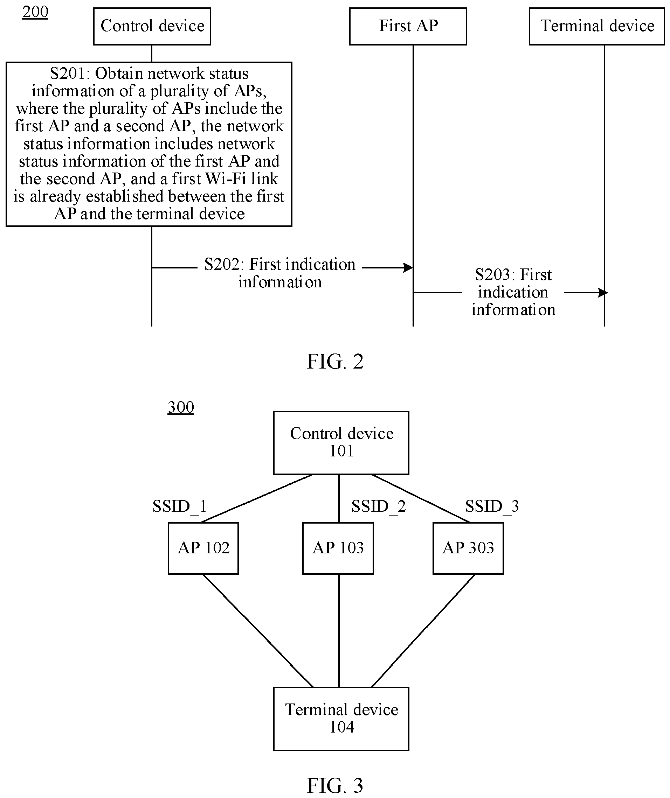

FIG. 2 is a schematic flowchart of a data transmission method 200 according to an embodiment of this application. The method 200 may be applied to the network architecture 100, or may be applied to another network architecture. This is not limited in this embodiment of this application. The method 200 includes the following steps:
S201: A control device obtains network status information of a plurality of APs, where the plurality of APs include a first AP and a second AP, the network status information includes network status information of the first AP and the second AP, and a first Wi-Fi link is already established between the first AP and a terminal device.
S202: The control device sends first indication information to the first AP based on the network status information, where the first indication information indicates the terminal device to establish a second Wi-Fi link to the second AP. Correspondingly, the first AP receives the first indication information.
S203: The first AP sends the first indication information to the terminal device through the first Wi-Fi link. Correspondingly, the terminal device receives the first indication information.

In this embodiment of this application, for example, the plurality of APs may periodically report the network status information of the plurality of APs to the control device. The control device may select a good AP, namely, the second AP, from the plurality of APs based on the network status information, and sends the first indication information via the first AP to indicate the terminal device to establish the second Wi-Fi link to the second AP. In this way, the control device may control the terminal device to maintain associations of the two Wi-Fi links at the same time. When quality of one of the Wi-Fi links is poor or one of the Wi-Fi links is interrupted, the terminal device may quickly switch data to the other associated Wi-Fi link for transmission. In this way, cooperative work among a plurality of Wi-Fi links can be implemented. Because the second Wi-Fi link is already established, a delay caused by switching among different Wi-Fi links is reduced, and reliability and stability of data transmission are improved. Therefore, service experience of a user is improved.

For example, this embodiment of this application helps reduce frame freezing problems of services such as a game, a live video, and the like, and to provide a low-delay and stable Wi-Fi network for the user.

In a possible implementation, the terminal device may establish two Wi-Fi links to different APs. In this case, the first AP and the second AP in this embodiment of this application are two different APs.

For example, the terminal device in this embodiment of this application is c the first AP is the AP 102 in FIG. 1, and the second AP is the AP 103 in FIG. 1. The Wi-Fi unit 112 of the terminal device 101 may first establish a 2.4 GHz Wi-Fi link to the Wi-Fi unit 107 of the AP 102. Then, the Wi-Fi unit 113 of the terminal device 101 establishes a 5 GHz Wi-Fi link to the Wi-Fi unit 110 of the AP 103. In this way, there are two Wi-Fi links for flexible switching of the terminal device, and a switching delay is reduced.

In another possible implementation, the terminal device may alternatively establish two Wi-Fi links to a same AP. In this case, the first AP and the second AP in this embodiment of this application may be considered as a same AP.

For example, the terminal device in this embodiment of this application is the terminal device 101 in FIG. 1, and the first AP and the second AP are considered as the AP 102 in FIG. 1. The Wi-Fi unit 112 of the terminal device 101 may first establish a 2.4 GHz Wi-Fi link to the Wi-Fi unit 107 of the AP 102. Then, the Wi-Fi unit 113 of the terminal device 101 establishes a 5 GHz Wi-Fi link to the Wi-Fi unit 108 of the AP 102. In this way, a switching delay of the terminal device on different Wi-Fi links of the same AP is reduced. Alternatively, the control device may control to-be-transmitted data transmitted to the terminal device to cooperate on two Wi-Fi links.

In an optional embodiment, the network status information in the method 200 includes at least one of a service set identifier (service set identifier, SSID), a quantity of accessed terminal devices, or signal strength information of an accessed terminal device.

It should be understood that a network name of a Wi-Fi network corresponding to an AP may be represented by the SSID, and one AP corresponds to one SSID.

The quantity of accessed terminal devices is a quantity of terminal devices accessing the AP. In this embodiment of this application, a terminal device accessing a wireless network may be referred to as a station (station, STA).

The signal strength information may be signal strength information that is of the terminal device and that is obtained by different APs. For the different APs, signal strength information that is of a same terminal device and that is obtained by the different APs may be different.

In an optional embodiment, S202 includes: The control device determines a plurality of candidate devices based on signal strength information that is of the terminal device and that is obtained by the plurality of APs, where the candidate devices include the second AP. The control device determines, based on a quantity of STAs accessing the plurality of candidate devices, that the second AP establishes the second Wi-Fi link to the terminal device. The control device sends the first indication information to the terminal device through the first Wi-Fi link, to indicate the terminal device to establish the second Wi-Fi link to the second AP.

In this embodiment of this application, the control device may first determine the plurality of candidate devices based on the signal strength information that is of the terminal device and that is obtained by the APs corresponding to different SSIDs, and then determine an optimal AP from the plurality of candidate devices based on the quantity of STAs of the APs corresponding to the different SSIDs. In this embodiment of this application, the optimal AP is the second AP. After determining that the second AP is the optimal AP in the plurality of APs, the control device may send the first indication information to the terminal device through the established first Wi-Fi link, to indicate the terminal device to establish the second Wi-Fi link to the second AP. This helps improve a Wi-Fi access speed of the terminal device, and to improve user experience.

In an optional embodiment, that the control device determines a plurality of candidate devices based on signal strength information that is of the terminal device and that is obtained by the plurality of APs includes: The control device compares first signal strength information in the signal strength information that is of the terminal device and that is obtained by the plurality of APs with a first threshold. If the first signal strength information is greater than or equal to the first threshold, the control device determines an AP corresponding to the first signal strength information as a candidate device.

In this embodiment of this application, each AP may obtain the signal strength information that is of the terminal device and that corresponds to the AP. Therefore, the control device can collect a plurality of pieces of signal strength information. The first signal strength information in the plurality of pieces of signal strength information is used as an example. If the first signal strength information is greater than or equal to the first threshold, the control device may consider that the AP corresponding to the first signal strength information and the terminal device meet a signal strength requirement. Therefore, the AP may be determined as the candidate device.

It should be understood that, in this embodiment of this application, the first signal strength information in the plurality of pieces of signal strength information is used as an example for description, and signal strength information corresponding to another AP also needs to meet a constraint of the first threshold. For an AP that does not meet the first threshold, the control device may exclude the AP.

For example, the first threshold may be -50dBm, -60dBm, or another value. This is not limited in this embodiment of this application.

In an optional embodiment, that the control device determines, based on the quantity of terminal devices accessing the plurality of candidate devices, that the second AP establishes the second Wi-Fi link to the terminal device includes: The control device determines a candidate device having a smallest quantity of accessed terminal devices in the plurality of candidate devices as the second AP. The control device determines that the second AP establishes the second Wi-Fi link to the terminal device.

In this embodiment of this application, the control device may compare the quantity of STAs of the plurality of candidate devices, and determine, after the comparison, that a candidate device having a smallest quantity of STAs is the second AP. Therefore, the control device may select the second AP for establishment of the second Wi-Fi link between the second AP and the terminal device.

Optionally, the first indication information sent by the control device to the terminal device may include an SSID of the second AP. The terminal device may learn, based on the SSID, that the control device indicates the terminal device to access the second AP corresponding to the SSID. In this way, the terminal device can establish the second Wi-Fi link to the second AP.

FIG. 3 is a schematic diagram of another network architecture 300 for implementing data transmission according to an embodiment of this application. Compared with the network architecture 100 shown in FIG. 1, an AP 303 is added to the network architecture 300.

It should be understood that internal units (for example, Wi-Fi units) of a control device 101, an AP 102, an AP 103, an AP 303, and a terminal device 104 are not shown herein.

As shown in FIG. 3, a network name of the AP 102 is an SSID_1, a network name of the AP 103 is an SSID_2, and a network name of the AP 303 is an SSID_3. The AP 102, the AP 103, and the AP 303 are APs associated to the control device 101. The control device and an AP associated to the control device can be associated in a wired or wireless manner.

For example, the control device 101 may periodically collect network status information of the AP 101, the AP 102, and the AP 303 associated to the control device 101, including at least one of an SSID, a quantity of accessed STAs, or signal strength information.

It is assumed that signal strength information that is of the terminal device 104 and that is obtained by the AP 102 is -40dBm, a quantity of STAs of the AP 102 is 4, signal strength information that is of the terminal device 104 and that is obtained by the AP 103 is -60dBm, a quantity of STAs of the AP 103 is 6, signal strength information that is of the terminal device 104 and that is obtained by the AP 303 is -40dBm, a quantity of STAs of the AP 303 is 2, and a first threshold is -50dBm.

It can be learned from the foregoing descriptions that the control device 101 may first determine a candidate device based on the signal strength information that is of the terminal device 104 and that is obtained by the AP associated to the control device 101. Because the first threshold is -50dBm, the signal strength information that is of the terminal device 104 and that is obtained by the AP 102 and the signal strength information that is of the terminal device 104 and that is obtained by the AP 303 are greater than the first threshold, and the signal strength information that is of the terminal device 104 and that is obtained by the AP 103 is less than the first threshold. Therefore, the control device 101 excludes the AP 103, and determines the AP 102 and the AP 303 as candidate devices.

Further, because the quantity of STAs of the AP 102 is 4, the quantity of STAs of the AP 303 is 2, and the quantity of STAs of the AP 303 is less than the quantity of STAs of the AP 102, the control device may determine the AP 303 as an optimal AP, namely, the foregoing second AP, and send the SSID_3 corresponding to the AP 303 to the terminal device 104 by using first indication information, so that the terminal device 104 establishes a second Wi-Fi link to the AP 303.

Optionally, the control device may compare a quantity of STAs of a plurality of candidate devices with a second threshold, select, from the plurality of candidate devices, a candidate device whose quantity of STAs is less than or equal to the second threshold, and send, to the terminal device, an SSID corresponding to a candidate device that meets a constraint of the second threshold, so that the terminal device selects any candidate device that meets the constraint of the second threshold for access.

For example, the second threshold may be 2, 4, or another value. This is not limited in this embodiment of this application.

Optionally, if there is one or more candidate devices having the smallest quantity of STAs in the plurality of candidate devices, the control device may randomly select one candidate device from the one or more candidate devices having the smallest quantity of STAs, and send an SSID corresponding to the candidate device to the terminal device. Alternatively, the control device may send, to the terminal device, the SSID corresponding to the one or more candidate devices having the smallest quantity of STAs, so that the terminal device randomly selects one candidate device from the one or more candidate devices for access.

It should be understood that, in the process of determining the optimal AP, namely, the second AP, the control device first determines the candidate device based on the signal strength information, and then determines the optimal AP based on the quantity of STAs of the AP. In addition, the control device may alternatively first determine the candidate device based on the quantity of STAs of the AP, and then determine the optimal AP based on the signal strength information. This is not limited in this embodiment of this application.

Optionally, after collecting the network status information of the plurality of APs, the control device may publish the network status information to the terminal device, and the terminal device may select, based on the network status information, one AP from the plurality of APs to establish the second Wi-Fi link.

In this embodiment of this application, the network status information includes at least one of an SSID, a quantity of accessed terminal devices, or signal strength information.

The signal strength information may be signal strength information of an AP, and different APs may have different signal strength information.

FIG. 3 is used as an example. It is assumed that signal strength information of the AP 102 is -40dBm, a quantity of STAs of the AP 102 is 4, signal strength information of the AP 103 is -60dBm, a quantity of STAs of the AP 103 is 6, signal strength information of the AP 303 is -40dBm, a quantity of STAs of the AP 303 is 5, and the first threshold is -50dBm.

The control device 101 sends collected network status information of a plurality of APs associated to the control device 101 to the terminal device 104. The terminal device 104 first compares a plurality of SSIDs in the network status information with a plurality of SSIDs displayed in a network list of the terminal device 104. If the terminal device 104 finds, through comparison, that an SSID in the network list does not match an SSID in the network status information, it indicates that an AP corresponding to the mismatched SSID is not an AP associated to the control device 101, and the terminal device may exclude the mismatched AP.

It should be understood that the plurality of SSIDs displayed in the network list of the terminal device 104 are SSIDs corresponding to the APs to which the terminal device 104 is already associated.

For example, if the network status information includes the SSID_1, the SSID_2, and the SSID_3, but an SSID_4 is displayed in the network list, the terminal device may exclude an AP corresponding to the SSID_4, and select an optimal AP from APs corresponding to the SSID_1, the SSID_2, and the SSID_3.

For the AP 102, the AP 103, and the AP 303 that are associated to the control device 101, the terminal device 104 first performs selection based on the signal strength information of the APs. Because the first threshold is -50dBm, the terminal device 104 may determine that the AP 102 and the AP 303 are candidate devices. Then, the control device 101 performs selection based on the quantity of STAs of the AP 102 and the quantity of STAs of the AP 303. Because the quantity of STAs of the AP 102 is less than the quantity of STAs of the AP 303, the terminal device 104 may determine that the AP 102 is the optimal AP, namely, the foregoing second AP. Further, the terminal device 104 may establish the second Wi-Fi link to the AP 102.

It should be understood that the network status information of the plurality of APs includes network status information of the first AP and the second AP. Optionally, the network status information further includes a quality indicator of the foregoing first Wi-Fi link. Based on the quality indicator of the first Wi-Fi link, the control device may perform the following operations:
1. When the quality indicator of the first Wi-Fi link cannot meet a communication requirement, the method 200 further includes: The control device sends second indication information to the terminal device through the first Wi-Fi link, where the second indication information indicates the terminal device to dissociate the first Wi-Fi link.

In this embodiment of this application, after the terminal device establishes the second Wi-Fi link to the second AP based on the first indication information of the control device, because the first Wi-Fi link cannot meet the communication requirement, the control device may indicate the terminal device to dissociate the first Wi-Fi link. In addition, the to-be-transmitted data is switched to the second Wi-Fi link for transmission. This helps reduce a switching delay of the to-be-transmitted data on the two Wi-Fi links, and to improve service use experience of the user.

Optionally, after the first Wi-Fi link is dissociated, the control device may further indicate, based on the network status information of the APs associated to the control device, the terminal device and one of the plurality of APs to establish a third Wi-Fi link. In this way, two Wi-Fi links always exist. This helps avoid a service interruption caused by poor quality or an interruption of one of the Wi-Fi links, and to reduce a delay of switching the Wi-Fi link. It should be understood that a process of establishing the third Wi-Fi link is similar to the process of establishing the second Wi-Fi link. Details are not described herein again.

2. When the quality indicator of the first Wi-Fi link can meet a communication requirement, the method 200 further includes: The control device determines a multi-path data transmission policy based on a service type of the to-be-transmitted data. The control device sends third indication information to the terminal device, where the third indication information indicates the multi-path data transmission policy.

In this embodiment of this application, the terminal device maintains the association of the first Wi-Fi link to the first AP, and maintains the association of the second Wi-Fi link to the second AP. The control device may control the to-be-transmitted data to be transmitted cooperatively on the two Wi-Fi links. In this way, coordinated transmission of the two Wi-Fi links helps improve a data transmission rate and reliability of data transmission.

For example, for a speed test service or a video on demand service based on the transmission control protocol (transmission control protocol, TCP), multi-path data transmission may be performed by using a multi-path aggregation policy.

For example, for a game service or a live video service based on UDP, multi-path data transmission may be performed by using a multi-fed and selective receiving policy.

For example, for a web page browsing service, the multi-path data transmission may be performed by using an active/standby policy.

Optionally, the multi-path data transmission policy is the multi-path aggregation policy, and the control device may transmit data to the terminal device based on the multi-path aggregation policy. The control device may split the to-be-transmitted data to obtain a first sub-data stream and a second sub-data stream, control the first sub-data stream to be transmitted on the first Wi-Fi link, and control the second sub-data stream to be transmitted on the second Wi-Fi link. After the two sub-data streams arrive at the terminal device, the terminal device may aggregate the two sub-data streams, to obtain the to-be-transmitted data.

Optionally, the multi-path data transmission policy is the multi-fed and selective receiving policy. The control device may transmit data to the terminal device based on the multi-fed and selective receiving policy. The control device may copy original data to obtain copied data, control the original data to be transmitted on the first Wi-Fi link, and control the copied data to be transmitted on the second Wi-Fi link. The terminal device may receive data that arrives first in the original data and the copied data, and discard data that arrives later, to obtain the to-be-transmitted data.

Optionally, the multi-path data transmission policy is the active/standby policy. The control device may transmit data to the terminal device based on the active/standby policy. The control device may determine that the first Wi-Fi link is an active data transmission link, determine that the second Wi-Fi link is a standby data transmission link, and control the to-be-transmitted data to be transmitted on the first Wi-Fi link.

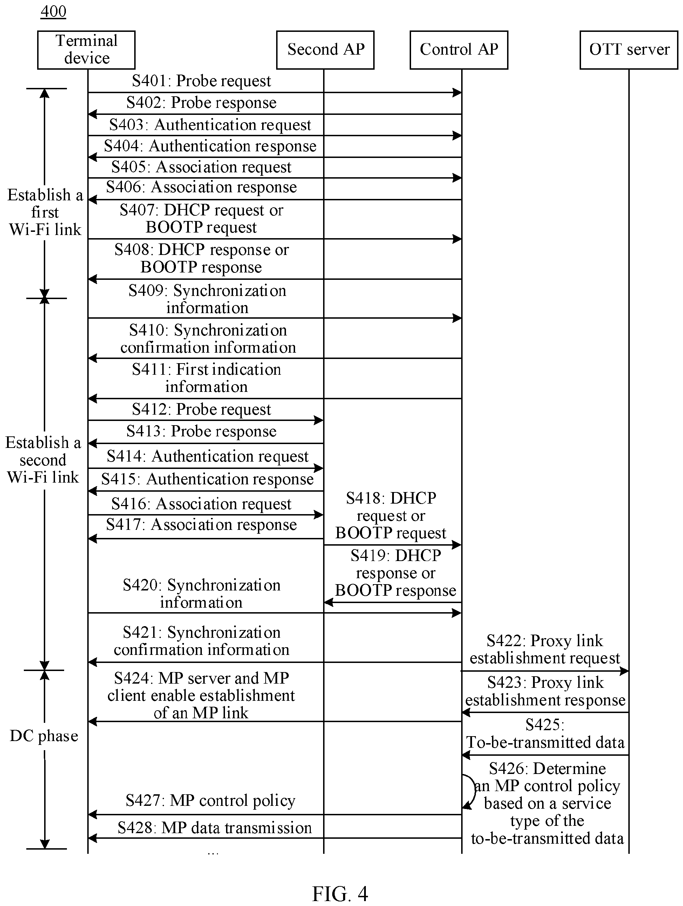

FIG. 4 is a schematic flowchart of another data transmission method 400 according to an embodiment of this application. The method 400 may be applied to the network architecture 100, may be applied to the network architecture 300, or may be applied to another network architecture. This is not limited in this embodiment of this application. S401 to S408 are a process of establishing a first Wi-Fi link, S409 to S421 are a process of establishing a second Wi-Fi link, and S422 to S428 are a data transmission (data transmission, DC) phase. The method 400 includes the following steps:

S401: A terminal device sends a probe request (probe request) to a control AP, where the probe request is used to scan a wireless network. Correspondingly, the control AP receives the probe request.

For example, S401 may be performed by a first Wi-Fi unit of the terminal device.

S402: The control AP sends a probe response (probe response) to the terminal device, where the probe response is used to notify the terminal device of available wireless network information. Correspondingly, the terminal device receives the probe response.

For example, S402 may be performed by a first Wi-Fi unit of the control AP.

S403: The terminal device sends an authentication (authentication) request to the control AP, where the authentication request is used for identity authentication of the terminal device. Correspondingly, the control AP receives the authentication request.

S404: The control AP sends an authentication response to the terminal device, where the authentication response indicates that the identity authentication performed by the control AP on the terminal device succeeds. Correspondingly, the terminal device receives the authentication response.

S405: The terminal device sends an association (association) request to the control AP, where the association request is used to request to establish a Wi-Fi association to the control AP. Correspondingly, the AP is controlled to receive the association request.

S406: The control AP sends an association response to the terminal device, where the association response indicates that the control AP confirms to establish the Wi-Fi association to the terminal device. Correspondingly, the terminal device receives the association response.

S407: The control AP sends a dynamic host configuration protocol (dynamic host configuration protocol, DHCP) request or a bootstrap protocol (bootstrap protocol, BOOTP) request to the terminal device, where the DHCP request or the BOOTP request is used to request an internet protocol (internet protocol, IP) address. Correspondingly, the control AP receives the DHCP request or the BOOTP request.

S408: The control AP sends a DHCP response or a BOOTP response to the terminal device, where the DHCP response or the BOOTP response is used to provide the IP address for the terminal device.

S409: The terminal device sends synchronization information to the control AP, where the synchronization information is used to probe whether the control AP supports a feature of associating two Wi-Fi links. Correspondingly, the control AP receives the synchronization information.

For example, S409 may be performed by a multi-path capability negotiation unit of the terminal device.

S410: The control AP sends synchronization confirmation information to the terminal device, where the synchronization confirmation information indicates that the control AP supports the feature of associating two Wi-Fi links. Correspondingly, the terminal device receives the synchronization confirmation information.

For example, S410 may be performed by a multi-path capability negotiation unit of the control AP.

S411: The control AP sends first indication information to the terminal device, where the first indication information indicates the terminal device to establish a second Wi-Fi link to a second AP. Correspondingly, the terminal device receives the first indication information.

For example, S411 may be performed by the multi-path capability negotiation unit of the control AP.

S412 to S417 are an interactive process between the terminal device and the second AP. The process is similar to that of S401 to S406, and details are not described herein again.

S418 and S419 are an interactive process between the second AP and the control AP. The control AP may allocate an IP address to the second AP and the terminal device for communication. The process is similar to that of S407 and S408, and details are not described herein again.

S420 and S421 are similar to S409 and S410, and details are not described herein again.

S422: The control AP sends a proxy (proxy) link request (which is referred to as a proxy link establishment request for short) to an OTT server. The proxy link establishment request is used to request the control AP to establish a proxy link to the OTT server. Correspondingly, the OTT server receives the proxy link establishment request.

For example, S422 may be performed by an MP server of the control AP.

S423: The OTT server sends a proxy link establishment response (which is referred to as a proxy link establishment response for short) to the control AP, where the proxy link establishment response is used to confirm establishment of a proxy link between the OTT server and the terminal device. Correspondingly, the control AP receives the proxy link establishment response.

S424: The MP server of the control AP and an MP client of the terminal device enable establishment of an MP link (which is referred to as MP link establishment for short).

S425: The OTT server sends to-be-transmitted data to the control AP through the proxy link established in S422 and S423. Correspondingly, the control AP receives the to-be-transmitted data.

S426: The control AP determines An MP control policy based on a service type of the to-be-transmitted data, in other words, determines the foregoing multi-path data transmission policy.

S427: The control AP sends the An MP control policy to the terminal device. Correspondingly, the terminal device receives the MP control policy.

S428: The control AP sends the to-be-transmitted data to the terminal device based on the MP control policy. Correspondingly, the terminal device receives the to-be-transmitted data based on the MP control policy.

For example, S428 may be performed by the MP server of the control AP.

In the method 400, the terminal device first establishes the first Wi-Fi link to the control AP, and then the control device may send the first indication information to the terminal device based on obtained network status information of a plurality of APs, to indicate the terminal device to establish the second Wi-Fi link to the second AP. In this way, two Wi-Fi links can be maintained at the same time. When the multi-path capability negotiation unit of the terminal device detects that communication quality of one of the Wi-Fi links is poor or one of the Wi-Fi links is interrupted, the terminal device may trigger Wi-Fi roaming, immediately switch the to-be-transmitted data to the other Wi-Fi link for transmission, and maintain single-path data transmission. This helps implement switching without being sensed by a user and improve communication stability. In addition, the control AP may further fully use the two Wi-Fi links to perform data transmission based on the An MP control policy, to maintain multi-path data transmission. This helps improve stability and reliability of communication between the terminal device and the control AP.

It should be understood that the method 400 is described by using an example in which the terminal device establishes the first Wi-Fi link to the control AP, and the terminal device establishes the second Wi-Fi link to the second AP. In this way, the terminal device may establish two Wi-Fi links to different APs. Alternatively, the terminal device may first establish the first Wi-Fi link to the control AP, and then establish the second Wi-Fi link to the control AP. In this case, the second AP in FIG. 4 may be considered as the control AP. Alternatively, it may be understood that the second AP and the control AP are a same AP. In this way, the terminal device may establish two Wi-Fi links with the same AP.

It should be understood that sequence numbers of the foregoing processes do not mean an execution sequence. The execution sequence of the processes should be determined based on functions and internal logic of the processes, and should not be constructed as any limitation on the implementation processes of embodiments of this application.

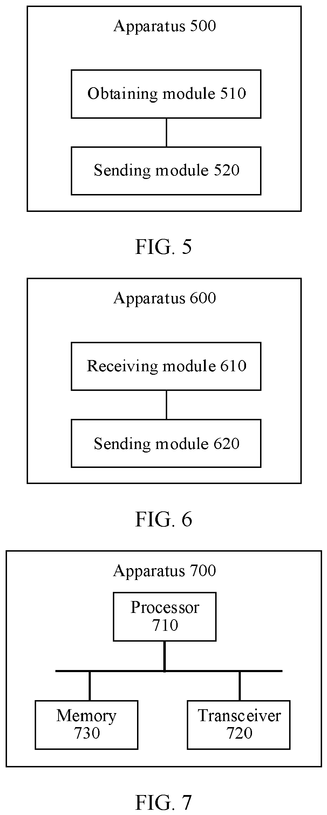

The foregoing describes in detail the data transmission method in embodiments of this application with reference to FIG. 1 to FIG. 4. The following describes in detail the data transmission apparatus in embodiments of this application with reference to FIG. 5 to FIG. 7.

FIG. 5 is a schematic block diagram of a data transmission apparatus 500 according to an embodiment of this application. The apparatus 500 includes: an obtaining module 510 and a sending module 520.

The obtaining module 510 is configured to obtain network status information of a plurality of APs, where the plurality of APs include a first AP and a second AP, the network status information includes network status information of the first AP and the second AP, and a first wireless fidelity Wi-Fi link is already established between the first AP and a terminal device. The sending module 520 is configured to send first indication information to the terminal device based on the network status information through the first Wi-Fi link, where the first indication information indicates the terminal device to establish a second Wi-Fi link to the second AP.

Optionally, the network status information includes at least one of a service set identifier SSID, a quantity of accessed terminal devices, or signal strength information of an accessed terminal device.

Optionally, the apparatus 500 further includes a processing module, configured to: determine a plurality of candidate devices based on signal strength information that is of the terminal device and that is obtained by the plurality of APs, where the plurality of candidate devices include the second AP; and determine, based on a quantity of terminal devices accessing the plurality of candidate devices, that the second AP establishes the second Wi-Fi link to the terminal device. The sending module 520 is configured to send the first indication information to the terminal device through the first Wi-Fi link, to indicate the terminal device to establish the second Wi-Fi link to the second AP.

Optionally, the processing module is configured to: compare first signal strength information in the signal strength information that is of the terminal device and that is obtained by the plurality of APs with a first threshold. If the first signal strength information is greater than or equal to the first threshold, the apparatus determines an AP corresponding to the first signal strength information as a candidate device.

Optionally, the processing module is configured to: determine a candidate device having a smallest quantity of accessed terminal devices in the plurality of candidate devices as the second AP; and determine that the second AP establishes the second Wi-Fi link to the terminal device.

Optionally, the sending module 520 is configured to: send second indication information to the terminal device through the first Wi-Fi link, where the second indication information indicates the terminal device to dissociate the first Wi-Fi link.

It should be understood that the apparatus 500 herein is embodied in a form of a functional module. The term "module" herein may be an application-specific integrated circuit (application specific integrated circuit, ASIC), an electronic circuit, a processor (for example, a shared processor, a special-purpose processor, or a group processor) configured to execute one or more software or firmware programs, a memory, a merged logic circuit, and/or another appropriate component that supports the described function. In an optional example, a person skilled in the art may understand that the apparatus 500 may be specifically the control device in the foregoing embodiments, or a function of the control device in the foregoing embodiments may be integrated into the apparatus 500. The apparatus 500 may be configured to perform procedures and/or steps corresponding to the control device in the foregoing method embodiments. To avoid repetition, details are not described herein again.

The apparatus 500 has a function of implementing corresponding steps performed by the control device in the foregoing methods. The function may be implemented by using hardware, or may be implemented by hardware executing corresponding software. The hardware or software includes one or more modules corresponding to the foregoing function. For example, the sending module 520 may be a communication interface, for example, a transceiver interface.

In this embodiment of this application, the apparatus 500 in FIG. 5 may alternatively be a chip or a chip system, for example, a system on chip (system on chip, SoC). Correspondingly, the sending module 520 may be a transceiver circuit of the chip. This is not limited herein.

FIG. 6 is a schematic block diagram of another data transmission apparatus 600 according to an embodiment of this application. The apparatus 600 includes: a receiving module 610 and a sending module 620.

The receiving module 610 is configured to receive first indication information from a control device, where the first indication information indicates a terminal device to establish a second Wi-Fi link to a second AP, and a first Wi-Fi link is already established between the terminal device and the apparatus. The sending module 620 is configured to send the first indication information to the terminal device through the first Wi-Fi link.

Optionally, the receiving module 610 is configured to receive second indication information from the control device, where the second indication information indicates the terminal device to dissociate the first Wi-Fi link. The sending module 620 is configured to send the second indication information to the terminal device through the first Wi-Fi link.

It should be understood that the apparatus 600 herein is embodied in a form of a functional module. A meaning of the term "module" herein is similar to the meaning of the module in the foregoing apparatus 500. Details are not described herein again. In an optional example, a person skilled in the art may understand that the apparatus 600 may be specifically the first AP in the foregoing embodiments, or a function of the first AP in the foregoing embodiments may be integrated into the apparatus 600. The apparatus 600 may be configured to perform procedures and/or steps corresponding to the first AP in the foregoing method embodiments. To avoid repetition, details are not described herein again.

The apparatus 600 has a function of implementing corresponding steps performed by the first AP in the foregoing method. The function may be implemented by using hardware, or may be implemented by hardware executing corresponding software. The hardware or software includes one or more modules corresponding to the foregoing functions. For example, the sending module 620 may be a communication interface, for example, a transceiver interface.

In this embodiment of this application, the apparatus 600 in FIG. 6 may alternatively be a chip or a chip system, for example, a system on chip (system on chip, SoC). Correspondingly, the sending module 620 may be a transceiver circuit of the chip. This is not limited herein.

FIG. 7 is a schematic block diagram of still another data transmission apparatus 700 according to an embodiment of this application. The apparatus 700 includes a processor 710, a transceiver 720, and a memory 730. The processor 710, the transceiver 720, and the memory 730 communicate with each other through an internal association path. The memory 730 is configured to store instructions. The processor 710 is configured to execute the instructions stored in the memory 630, to control the transceiver 620 to send a signal and/or receive a signal.

It should be understood that the apparatus 700 may be specifically the control device or the first AP in the foregoing embodiments, or a function of the control device or the first AP in the foregoing embodiments may be integrated into the apparatus 700. The apparatus 700 may be configured to perform steps and/or procedures corresponding to the control device or the first AP in the foregoing method embodiments. Optionally, the memory 740 may include a read-only memory and a random access memory, and provide instructions and data to the processor. A part of the memory may further include a non-volatile random access memory. For example, the memory may further store information of a device type. The processor 720 may be configured to execute the instructions stored in the memory. When the processor executes the instructions, the processor can perform steps and/or procedures corresponding to the control device or the first AP in the foregoing method embodiments.

It should be understood that in embodiments of this application, the processor may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the conventional technology, such as a random access memory, a flash memory, a read-only memory, a programmable read-only memory, an electrically erasable programmable memory, a register, or the like. The storage medium is located in the memory, and the processor executes instructions in the memory and completes the steps in the foregoing methods in combination with the hardware in the processor. To avoid repetition, details are not described herein again.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, division into the modules is merely logical function division and there may be other division modes in actual applications. For example, a plurality of modules or components may be combined or may be integrated to another system, or some characteristics may be ignored or not performed. In addition, the displayed or discussed mutual couplings or direct couplings or communication associations may be implemented through some interfaces. The indirect couplings or communication associations between the apparatuses or modules may be implemented in electrical, mechanical, or other forms.

The modules described as separate parts may or may not be physically separate, and parts displayed as modules may or may not be physical modules, that is, may be located in one position, or may be distributed on a plurality of network modules. A part of or all of the modules may be selected based on actual requirements to achieve the objectives of the solutions of embodiments.

In addition, function modules in embodiments of this application may be integrated into one processing module, or each module may exist alone physically, or two or more modules may be integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (ROM), a random access memory (random access memory, RAM), a magnetic disk, an optical disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
obtaining, by a control device, network status information of a plurality of APs, wherein the plurality of APs comprise a first AP and a second AP, the network status information comprises network status information of the first AP and the second AP, and a first wireless fidelity Wi-Fi link is already established between the first AP and a terminal device; and
sending, by the control device, first indication information to the terminal device based on the network status information through the first Wi-Fi link, wherein the first indication information indicates the terminal device to establish a second Wi-Fi link to the second AP.

2. The method according to claim 1, wherein the network status information comprises at least one of a service set identifier SSID, a quantity of accessed terminal devices, or signal strength information of an accessed terminal device.

3. The method according to claim 1 or 2, wherein the sending, by the control device, first indication information to the terminal device based on the network status information through the first Wi-Fi link comprises:
determining, by the control device, a plurality of candidate devices based on signal strength information that is of the terminal device and that is obtained by the plurality of APs, wherein the plurality of candidate devices comprise the second AP;
determining, by the control device based on a quantity of terminal devices accessing the plurality of candidate devices, that the second AP establishes the second Wi-Fi link to the terminal device; and
sending, by the control device, the first indication information to the terminal device through the first Wi-Fi link, to indicate the terminal device to establish the second Wi-Fi link to the second AP.

4. The method according to claim 3, wherein the determining, by the control device, a plurality of candidate devices based on signal strength information that is of the terminal device and that is obtained by the plurality of APs comprises:
comparing, by the control device, first signal strength information in the signal strength information that is of the terminal device and that is obtained by the plurality of APs with a first threshold; and
if the first signal strength information is greater than or equal to the first threshold, determining, by the control device, an AP corresponding to the first signal strength information as a candidate device.

5. The method according to claim 3 or 4, wherein the determining, by the control device based on a quantity of terminal devices accessing the plurality of candidate devices, that the second AP establishes the second Wi-Fi link to the terminal device comprises:
determining, by the control device, a candidate device having a smallest quantity of accessed terminal devices in the plurality of candidate devices as the second AP; and
determining, by the control device, that the second AP establishes the second Wi-Fi link to the terminal device.

6. The method according to any one of claims 1 to 5, wherein the method further comprises:
sending, by the control device, second indication information to the terminal device through the first Wi-Fi link, wherein the second indication information indicates the terminal device to dissociate the first Wi-Fi link.

7. A data transmission method, wherein the method comprises:
receiving, by a first AP, first indication information from a control device, wherein the first indication information indicates the terminal device to establish a second Wi-Fi link to a second AP, and a first wireless fidelity Wi-Fi link is already established between the terminal device and the first AP; and
sending, by the first AP, the first indication information to the terminal device through the first Wi-Fi link.

8. The method according to claim 7, wherein the method further comprises:
receiving, by the first AP, second indication information from the control device, wherein the second indication information indicates the terminal device to dissociate the first Wi-Fi link; and
sending, by the first AP, the second indication information to the terminal device through the first Wi-Fi link.

9. A data transmission apparatus, comprising:
an obtaining module, configured to obtain network status information of a plurality of APs, wherein the plurality of APs comprise a first AP and a second AP, the network status information comprises network status information of the first AP and the second AP, and a first wireless fidelity Wi-Fi link is already established between the first AP and a terminal device; and
a sending module, configured to send first indication information to the terminal device based on the network status information through the first Wi-Fi link, wherein the first indication information indicates the terminal device to establish a second Wi-Fi link to the second AP.

10. The apparatus according to claim 9, wherein the network status information comprises at least one of a service set identifier SSID, a quantity of accessed terminal devices, or signal strength information of an accessed terminal device.

11. The apparatus according to claim 9 or 10, wherein the apparatus further comprises a processing module, specifically configured to:
determine a plurality of candidate devices based on signal strength information that is of the terminal device and that is obtained by the plurality of APs, wherein the plurality of candidate devices comprise the second AP; and
determine, based on a quantity of terminal devices accessing the plurality of candidate devices, that the second AP establishes the second Wi-Fi link to the terminal device; wherein
the sending module is configured to: send the first indication information to the terminal device through the first Wi-Fi link, to indicate the terminal device to establish the second Wi-Fi link to the second AP.

12. The apparatus according to claim 11, wherein the processing module is specifically configured to:
compare first signal strength information in the signal strength information that is of the terminal device and that is obtained by the plurality APs with a first threshold; and
if the first signal strength information is greater than or equal to the first threshold, determine, by the apparatus, an AP corresponding to the first signal strength information as a candidate device.

13. The apparatus according to claim 11 or 12, wherein the processing module is specifically configured to:
determine a candidate device having a smallest quantity of accessed terminal devices in the plurality of candidate devices as the second AP; and
determine that the second AP establishes the second Wi-Fi link to the terminal device.

14. The apparatus according to any one of claims 9 to 13, wherein the sending module is further configured to:
send second indication information to the terminal device through the first Wi-Fi link, wherein the second indication information indicates the terminal device to dissociate the first Wi-Fi link.

15. A data transmission apparatus, comprising:
a receiving module, configured to receive first indication information from a control device, wherein the first indication information indicates the terminal device to establish a second Wi-Fi link to a second AP, and a first wireless fidelity Wi-Fi link is already established between the terminal device and the apparatus; and
a sending module, configured to send the first indication information to the terminal device through the first Wi-Fi link.

16. The apparatus according to claim 15, wherein the receiving module is further configured to:
receive second indication information from the control device, wherein the second indication information indicates the terminal device to dissociate the first Wi-Fi link; and
the sending module is further configured to: send the second indication information to the terminal device through the first Wi-Fi link.

17. A data transmission apparatus, comprising: a processor, wherein the processor is coupled to a memory, and the memory is configured to store a computer program; and when the processor invokes the computer program, the apparatus is enabled to perform the method according to any one of claims 1 to 8.

18. A computer-readable storage medium, configured to store a computer program, wherein the computer program comprises instructions used to implement the method according to any one of claims 1 to 8.

19. A computer program product, wherein the computer program product comprises computer program code; and when the computer program code is run on a computer, the computer is enabled to implement the method according to any one of claims 1 to 8.
